# EUROPEAN PATENT SPECIFICATION

(11) **EP 1 366 121 B1**
(45) Date of publication and mention of the grant of the patent: **14.05.2008**
(21) Application number: 02718102.3
(22) Date of filing: 06.02.2002
(51) Int. Cl.: C08L 95/00, C04B 26/26, C09J 195/00

(54) **PROCESS FOR JOINING SOLID-STATE COMPOSITIONS**
VERFAHREN ZUM VERBINDEN VON FESTPHASIGEN ZUSAMMENSETZUNGEN
PROCEDE PERMETTANT D'ASSEMBLER DES COMPOSITIONS A L'ETAT SOLIDE

(30) Priority: 08.02.2001 EP 01301113
(43) Date of publication of application: 03.12.2003
(73) Proprietor: SHELL INTERNATIONALE RESEARCH MAATSCHAPPIJ B.V., 2596 HR Den Haag (NL)
(72) Inventor: HOVENKAMP, Robert, Christiaan, NL-1031 CM Amsterdam (NL); MAJOOR, Joannes, Cornelis, Jozef, Emmanuel, NL-1031 CM Amsterdam (NL); VERBIST, Guy, Lode, Magda, Maria, NL-1031 CM Amsterdam (NL)
(86) International application number: PCT/EP2002/001242
(87) International publication number: WO 2002/062898

(56) References cited:
- WO-A-00/46164
- US-A- 5 662 733

## Description

The present invention relates to a process for joining solid-state compositions, an asphaltenes-containing adhesive, a process for recycling solid-state compositions and a process of crack-repair.

### Background of the invention

The recycling of materials used in the construction industry is becoming increasingly important. For this purpose, buildings and floorings are being designed which, as well as having good structural properties, may be readily dismantled when they are no longer required so that the materials from which they are constructed can be reused. Conventional mortar, formed by the mixing of cement, sand and water; or cement, lime-sand and water has traditionally been used for joining construction materials. However, mortar hardens irreversibly making the later separation of the construction materials difficult. It would therefore be advantageous if construction materials could be securely joined to one another in such a way that they could be readily separated when necessary.

WO 00/46164 describes a solid-state composition, which comprises from 70 to 99 % by weight of solid particles and from 30 to 1% by weight of a hydrocarbonaceous binder. Compositions such as those described in WO 00/46164 can be used as alternatives to conventional cement concrete and display, amongst other attributes, excellent flexural strength, compression strength, and impact and crack resistance. Whilst these so-called carbon concrete compositions have numerous practical applications, for example as paving stones, roof tiles etc., it has been found that they do not adhere well to conventional cement-based mortars and that articles of carbon concrete cannot be securely joined using conventional mortar. Therefore, it would be advantageous if there was a means by which articles of carbon concrete could be securely joined together.

### Statement of the invention

It has now surprisingly been found possible to join solid-state compositions of both carbon concrete and cement concrete by means of an asphaltenes-containing adhesive.

According to the present invention there is provided a process for joining solid-state compositions comprising adhering two or more solid-state compositions together with an asphaltenes-containing adhesive which comprises in the range of from 100 to 10 % by weight of an asphaltenes-containing binder having a penetration of less than 15 dmm, and in the range of from 0 to 90% by weight of solid particles, based on total weight of asphaltenes-containing adhesive, with the proviso that the solid particles are not solely petroleum coke particles.

### Detailed description of the invention

Asphaltenes are constituents of bituminous materials which are soluble in carbon disulphide, but not in petroleum spirit. Typically, asphaltenes constitute 5% to 25% of a bituminous material (page 90 of the Shell Bitumen Handbook September 1991). The presence of asphaltenes can be established using test method IP143/96.

The asphaltenes-containing adhesive to be employed in the process of the present invention preferably comprises in the range of from 100 to 15%, more preferably from 100% to greater than 30%, even more preferably from 90% to greater than 30%, and most preferably from 70% to greater than 30% by weight of asphaltenes-containing binder; and preferably comprises in the range of from 0 to 85%, more preferably from 0 to less than 70%, even more preferably from 10 to less than 70%, and most preferably from 30 to less than 70% by weight of solid particles.

The solid particles can be chosen from a wide range of compounds. A non-exhaustive list of solid particles which may be used includes mineral particles cement, recycled asphalt, recycled tyres, crushed shells, fly ash, porous particles such as zeolite and perlite, spent catalyst, wood particles such as wood chips, and electrically conductive particles, e.g. graphite particles or petroleum coke particles. Preferred solid particles are mineral particles. Mineral particles which may conveniently be used include particles of clay, silt, limestones or quartz, preferred mineral particles being mineral particles comprising silica and/or alumina. In the process of the present invention the solid particles do not consist solely of petroleum coke particles; petroleum coke being a pure form of carbon formed during the refining of crude oil by high temperature carbonization of the heavy residues. Where carbon particles such as carbon black or graphite are employed as the solid particles it is preferred that the solid particles are not solely carbon particles.

Solid particles having a size of less than 63 micrometers are known in the art as filler; particles having a particle size in the range of 63 micrometers to 2mm are known as sand; and particles having a particle size in the range of 2mm to 8mm are known as stones.

The size of the solid particles to be used in the present invention may vary depending on the nature of the solid-state compositions to be joined, however in one embodiment of the present invention it is preferred that the solid particles have an average particle size of less than 63 micrometers. In general, it is preferred that the solid particles have a particle size below 63 micrometers as by using smaller particles thinner layers of adhesive may be applied.

In a further embodiment of the present invention the solid particles may conveniently comprise a mixture of particles having a particle size of less than 63 micrometer (filler) and particles having a particle size in the range of from 63 micrometers to 2mm (sand). Such mixtures of sand and filler may conveniently be used in applications where the asphaltenes-containing adhesive comprises an amount of asphaltenes-containing binder greater than 70% by weight, based on total weight of asphaltenes-containing adhesive.

The solid particles employed in the present invention preferably have an average particle size of at least 1 micrometer.

In a preferred embodiment of the present invention the asphaltenes-containing adhesive comprises asphaltenes-containing binder and solid particles in a weight/weight ratio of from 3:1 to 1:3, more preferably from 2:1 to 1:2.

The asphaltenes-containing binder can be any asphaltenes-containing binder having a penetration of less than 15 dmm. The penetration of the asphaltenes-containing binder is measured according to ASTM D5 at 25°C. Preferably the asphaltenes-containing binder has a penetration in the range of from 1 dmm to less than 15 dmm.

Preferably, the binder has a penetration of at most 10 dmm, more preferably less than 10 dmm and most preferably less than 8 dmm. Further, the binder preferably has a penetration of at least 1 dmm at 25 °C, more preferably at least 2 dmm, more preferably at least 4 dmm. Penetration values below 2 dmm can be measured by measuring at 40 °C and subsequently extrapolating the results to 25 °C.

The asphaltenes-containing binder according to the present invention preferably has a softening point measured according to the ring and ball test of ASTM D 36, of at least 50 °C, more preferably at least 70 °C, even more preferably at least 100 °C.

Further, the binder preferably has a softening point of at most 157°C, more preferably at most 150 °C, even more preferably at most 130 °C.

The asphaltenes-containing binder can be prepared in any way that is well-known to someone skilled in the art, provided that the binder obtained has the required hardness.

A process by which the binder may be prepared is deasphalting, more particularly propane deasphalting. In this process, a residue from distillation of crude oil is treated with solvent under controlled conditions such that bitumen binder is precipitated. The solvent preferably is propane, propane-butane mixtures or pentane. Most preferably, the solvent is propane. The residue is usually residue from an atmospheric distillation tower. The process is primarily used for crude oils of relatively low asphalt content. The process can suitably be carried out as a countercurrent liquid-liquid extraction. Further details of the process are well known to someone skilled in the art. Suitable processes have been described in Kirk-Othmer Encyclopedia of Chemical Technology, Volume 3, pages 297-298.

The asphaltenes-containing binder preferably contains (i) in the range of from 15 to 95 % by weight, based on total binder, of asphaltenes, as determined according IP 143/96, which asphaltenes contain at least 60 % aromatic carbon, and (ii) in the range of from 5 to 85 % by weight, based on total binder, of further hydrocarbons as determined according IP 143/96. The percentage of aromatic carbon atoms present in the asphaltenes is measured by separating off the asphaltenes in the binder as described in IP 143/96, dissolving a sample of the asphaltenes in carbon disulphide or chloroform and assessing the percentage of aromatic carbon by ¹³C NMR.

The asphaltenes comprise hydrogen, carbon and optionally other atoms. Specifically, the asphaltenes can contain up to 15 % by weight of atoms other than hydrogen and carbon, more specifically sulphur, nitrogen and oxygen, preferably at most 12 % by weight, most preferably at most 10 % by weight, based on asphaltenes.

Generally, the further hydrocarbons present in the above preferred binder, can contain up to 15 % by weight of atoms other than hydrogen and carbon, more specifically sulphur, nitrogen and oxygen, preferably at most 12 % by weight, most preferably at most 10 % by weight, based on further hydrocarbons.

Preferably, the binder contains at least 20 % by weight of asphaltenes, based on total binder. More preferably, the binder contains at least 25 % by weight of asphaltenes. The amount of asphaltenes is preferably up to 95 % by weight, more preferably up to 70 % by weight, more preferably up to 60 % by weight, more preferably up to 50 % by weight, more preferably up to 45 % by weight, most preferably at most 40 % by weight.

The asphaltenes-containing binder containing (i) in the range of from 15 to 95 % by weight of asphaltenes-containing at least 60 % aromatic carbon, and (ii) in the range of from 5 to 85 % by weight of further hydrocarbons, can be prepared by subjecting hydrocarbons to thermal cracking. Preferably, a residual hydrocarbon fraction is subjected to thermal cracking. The thermally cracked product can be used as such, or in combination with any other hydrocarbon fraction as long as the required hardness is achieved.

Preferably, the binder consists at least partly of product obtained by subjecting hydrocarbons to thermal cracking. Most preferably, the binder consists of product obtained by subjecting hydrocarbons to thermal cracking. Although in such case part of the thermally cracked product can be used, the binder only contains product which has been thermally cracked.

Thermal cracking is preferably carried out by preheating a hydrocarbon fraction to a temperature in the range of from 350 to 500 °C, maintaining the pre-heated oil at such conditions as to cause thermal cracking and subsequently separating off one or more light fractions. Thermal cracking of residual fractions usually involves a temperature of between 300 and 600 °C. The pressure can be in the range of from 1 to 100 x 10⁵ N/m² (bar), preferably in the range of from 2 to 20 x 10⁵ N/m² (bar). Thermal cracking is preferably carried out in a soaker. The thermally cracked product as such can be used as binder, or the binder can be only a part of the thermally cracked product. In the latter case, the binder is separated from the thermally cracked product in any suitable way. Preferably, the binder is produced by separating off the light fractions by flash distillation, more preferably by vacuum flash distillation.

Another process by which the binder can be obtained comprises subjecting a residual fraction to hydroconversion at a temperature in the range of from 200 to 450 °C and a pressure in the range of from 50 to 200 x 10⁵ N/m² (bar), optionally preceded by hydrodemetallization. Preferably, the hydroconversion is hydrodesulphurization.

The process of the present invention may be used to join a wide range of solid-state compositions. In particular, the process may be conveniently used to join composite solid-state materials comprising a mix of particulate material and binder, such as cement concrete or carbon concrete as described in WO 00/46164. Accordingly, the process of the present invention may be conveniently used to join solid-state compositions of carbon concrete to carbon concrete; solid-state compositions of cement concrete to cement concrete; and solid-state compositions of carbon concrete to cement concrete.

One application where the present invention may be conveniently employed comprises joining road bases of cement concrete or a low void content road asphalt to a top layer of a high void content road asphalt.

The process of the present invention is particularly suitable for joining construction elements; a construction element being a self contained component of fixed dimensions used in construction. Construction elements include building elements. Preferred construction elements are pipes, tiles, roof tiles, floor tiles, paving stones (pavers), flagstones, bricks, foundations, boards, gutters and/or conduits. For the avoidance of doubt, road surfaces, floors and roofs are not construction elements. Preferably, the construction element will have dimensions of at most 5 meters by at most 5 meters by at most 40 meters, more specifically dimensions of at most 1 meter by at most 1 meter by at most 2 meters. Preferably, the element will have dimensions of at most 1 meter by at most 1 meter by at most 0.5 meter. Most preferably, the element will have dimensions of at most 20 centimeter by at most 20 centimeter by at most 10 centimeter.

Accordingly, a preferred embodiment of the present invention provides a process for joining carbon concrete construction elements, whilst another preferred embodiment provides a process for joining cement concrete construction elements.

An advantageous aspect of the present invention is that once set the asphaltenes-containing adhesive is a substantially water-proof material. This is in contrast to conventional mortar which is a porous water permeable material. Accordingly, the present invention may be advantageously employed in applications where a water-proof join between solid-state compositions is required, for example to join paving stones where a water-proof paving surface is required.

The solid-state compositions may be joined according to the present invention in any practicable manner. One way in which the solid-state compositions can be joined is by heating the solid-state compositions and then applying the asphaltenes-containing adhesive to a surface of at least one of the solid-state compositions to be joined, subsequently contacting the solid state compositions, and then allowing the compositions to cool and the adhesive to set. Generally, contacting the solid-state compositions by force of hand is sufficient to induce a strong join and no further pressure need be exerted on the compositions whilst the adhesive sets, however extra pressure may be exerted if desired or to hasten the joining process.

The solid-state compositions may be heated in any practicable manner, for example by heating in an oven or by heating the surface of the composition to be joined with a hot-air gun. Preferably, the surfaces of the solid sate composition to be joined are heated to a temperature of at least 100 °C, preferably a temperature in the range of from 100 to 250 °C, more preferably of from 140 to 200 °C.

The asphaltenes-containing adhesive is applied by heating the adhesive to a temperature sufficient that the adhesive may be conveniently poured or applied by means of an applicator to a surface of a solid-state composition. Generally, as thin a layer of adhesive is applied such that the solid-state compositions are joined by a layer of adhesive of preferably less than 5mm thick, more preferably less than 2mm.

Where the asphaltenes-containing adhesive of the present invention comprises electrically conductive solid particles e.g. graphite or coke particles, the solid state-compositions may be conveniently joined by applying a sample of asphaltenes-containing adhesive to the surface of a solid-state composition to be joined and subsequently passing an electrical current through the adhesive until it softens, then contacting the solid-state composition with another solid-state composition and allowing the adhesive to cool and set.

Joins between solid-state compositions joined by the process of the present invention display a high flexural strength. Preferably, the joins have a flexural strength of at least 0.5 N/mm², more preferably of at least 1 N/mm², even more preferably of at least 2 N/mm² and most preferably of at least 4 N/mm². Flexural strength is measured according to NEN 7000 "Nederlands Normalisatie Instituut" 2nd Edition July 1985.

Whilst the process for joining solid-state compositions of the present invention may be used to join a wide range of solid-state compositions, best results are achieved when the surfaces to be joined are substantially flat surfaces (i.e. not curved, arced or bulged), or broken surfaces, i.e. when the process is used to rejoin fractured solid-state compositions.

In many cases where solid-state compositions joined by the present process are subjected to flexural strength testing the joins only break when a force equivalent to or approaching that required to break the solid-state composition itself is applied.

Solid-state compositions joined by the process of the present invention may be conveniently recycled by heating the asphaltenes-containing adhesive to a temperature where the asphaltenes-containing adhesive begins to soften such that the articles may readily be separated and then re-used. The temperature to which the adhesive is heated before the solid-state compositions may be separated and recycled is preferably less than 200 °C, more preferably less than 160 °C, and is preferably greater than 80 °C, more preferably greater than 100 °C. When the solid-state compositions are of cement concrete the solid-state compositions may be heated to greater than 200 °C.

Where the solid particles comprise electrically conductive solid particles e.g. graphite or coke particles the binder may be conveniently reheated for the purpose of recycling by passing an electrical current through the adhesive. A further advantageous feature of this embodiment is that when the solid-state compositions are recycled, the asphaltenes-containing adhesive may also be collected and re-used. Samples of adhesive which have been subjected to several heat treatments may display increased flexural strength.

Accordingly, the present invention further providers a process for recycling solid-state compositions comprising heating an asphaltenes-containing adhesive which joins two or more solid-state compositions to a temperature where the asphaltenes-containing adhesive softens such that the solid-state compositions may readily be separated which asphaltenes-containing adhesive comprises in the range of from 100 to 10 % by weight of an asphaltenes-containing binder having a penetration of less than 15 dmm, and in the range of from 0 to 90% by weight of solid particles, based on total weight of asphaltenes-containing adhesive, with the proviso that the solid particles are not solely petroleum coke particles. Said process may be conveniently used for the recycling of construction elements.

The present invention still further provides for an asphaltenes-containing adhesive comprising in the range of from 100% to greater than 30% of an asphaltenes-containing binder having a penetration of less than 15 dmm, and in the range of from 0 to less than 70 % by weight of solid particles, based on total weight of asphaltenes-containing adhesive, with the proviso that the solid particles are not solely petroleum coke particles; said asphaltenes-containing adhesive preferably comprising from 99.9% to greater than 30%, more preferably from 90% to greater than 30%, and most preferably from 70% to greater than 30% by weight of asphaltenes-containing binder; and preferably comprises from 0.1 % to less than 70%, more preferably from 10 to less than 70%, and most preferably from 30 to less than 70% by weight of solid particles.

The asphaltenes-containing adhesive described herein may also be used to repair cracks or fissures in solid-state compositions.

Accordingly, the present invention further provides a process of crack-repair comprising applying an asphaltenes-containing adhesive to a crack in a solid-state composition, which asphaltenes-containing adhesive comprises in the range of from 100 to 10 % by weight of an asphaltenes-containing binder having a penetration of less than 15 dmm, and in the range of from 0 to 90% by weight of solid particles, based on total weight of asphaltenes-containing adhesive, with the proviso that the solid particles are not solely petroleum coke particles.

The amount and size distribution of the solid particles in an asphaltenes-containing adhesive to be used in the process of crack-repair of the present invention depends upon the size and nature of the crack to be repaired. In general, for larger cracks, larger amounts of solid particles and a greater proportion of larger solid particles, (e.g. sand or stones) are preferred; it being a particular advantage of the present process that the asphaltenes-containing adhesive may be specifically formulated to best repair any given crack.

Whilst, as described above, the amount and size of the solid particles required to achieve best results for crack-repair will vary from crack to crack, particularly good results are achieved using an asphaltenes-containing adhesive comprising a mixture of solid particles having a particle size of less than 63 micrometer (filler) and solid particles having a particle size of from 63 micrometers to 2mm (sand).

The process of crack-repair of the present invention may be conveniently used to repair cracks in carbon concrete and cement concrete. Further, the process may be very conveniently used to repair cracks occurring in mortar or joins between solid-sate compositions, e.g. joins between carbon concrete and cement concrete construction elements.

In order to increase their load-bearing properties solid-state compositions may contain reinforcement elements. For example, solid-state compositions comprising a mix of particulate material and binder, such as cement concrete, are frequently reinforced with steel bars. In uses where such solid-state compositions are exposed to weathering the steel bars are susceptible to corrosion through the effects of water penetrating the concrete and contacting the steel. This corrosion weakens the strength of the solid-state composition and any construction or building in which it is employed. Corrosion of the reinforcement element is a particular problem in reinforced solid-state compositions that are in contact with salt water. In order to protect against corrosion, the outer surface of reinforced cement concrete has been coated with water-resistant materials such as epoxy-resins, polyurethanes and acrylic paints. The water-resistant materials are not applied directly to the reinforcement element as this reduces the strength with which the reinforcement element is secured in the solid-state composition.

In a further embodiment of the present invention, the asphaltenes-containing adhesive hereinbefore described may be used to coat a reinforcement element to be used in a solid-state composition. Such a coating of asphaltenes-containing adhesive reduces the susceptibility to corrosion of reinforcement elements in solid-state compositions whilst retaining the strength with which the reinforcement element is secured in the concrete.

Accordingly, the present invention further provides a process of preparing a reinforced solid-state composition, which process comprises coating a reinforcement element with a first layer of asphaltenes-containing adhesive and a second layer of construction material, which asphaltenes-containing adhesive comprises in the range of from 100 to 10 % by weight of an asphaltenes-containing binder having a penetration of less than 15 dmm, and in the range of from 0 to 90 % by weight of solid particles, based on total weight of asphaltenes-containing adhesive, with the proviso that the solid particles are not solely petroleum core particles; and a reinforced solid-state composition obtainable by said process. When used in accordance with this embodiment the asphaltenes-containing adhesive preferably comprises in the range of from 100 to greater than 30 %, more preferably 100 to 50 %, even more preferably 100 to 75 % and most preferably 100 to 90 % by weight of asphaltenes-containing binder, and in the range of from 0 to less than 70 %, more preferably 0 to 30 %, even more preferably 0 to 25 % and most preferably 0 to 10 % by weight of solid particles.

The reinforcement element may conveniently be a metal bar or a metal frame to be embedded in the construction material. Preferred reinforcement elements are steel bars. The first layer of asphaltenes-containing adhesive may be applied by heating the asphaltenes-containing adhesive to a temperature sufficient that the adhesive may be applied conveniently by means of an applicator to the reinforcement element. Alternatively, the reinforcement element may be immersed in the heated adhesive for a short time and then removed so that a layer of asphaltenes-containing adhesive may set on the reiforcement element. Generally, a thin layer of adhesive is applied such that the first layer of asphaltenes-containing adhesive is preferably less than 5 mm thick, more preferably less than 2 mm.

The construction material of the second layer may be any material used in construction, however it is preferred that the construction material is a composite construction material comprising a mix of particulate material and binder, such as cement concrete or carbon concrete as described in WO 00/46164. When preparing reinforced solid-state compositions made of carbon concrete it is advantageous to use the present process as it increases the strength with which the reinforcement element is secured in the carbon concrete and prevents cracks forming in the composition around the steel to carbon concrete interface.

The second layer of construction material may be applied to the reinforcement element using techniques known to those skilled in the art. For example, where the construction material is a composite construction material such as cement concrete or carbon concrete, the second layer may be applied by pouring a free flowing mixture of construction material into a mould comprising at least one reinforcement element coated in asphaltenes-containing adhesive, subsequently allowing the construction material to set, and then separating the reinforced solid-state composition from the mould.

The invention will be further understood from the following illustrative examples.

Flexural strength measurements were carried out according to NEN 7000; a test of the "Nederlands Normalisatie Istituut, 2nd edition, July, 1985".

An asphaltenes-containing binder was obtained by thermal cracking of a residual fraction of a crude of Middle East origin having a boiling point of 520 °C or more, and subsequently removing the light fractions by subjecting the product to vacuum flashing. The binder obtained had a boiling point of 520 °C or more under atmospheric conditions. The binder contained 25 %wt of asphaltenes (IP 143/96), had a penetration of 6-7 dmm at 25 °C (ASTM D5 at 25 °C) and had a ring and ball softening point of 90 °C (ASTM D 36). The asphaltenes had 65 % by weight of carbon atoms in aromatic rings.

Asphaltenes-containing adhesives a) and b) were prepared from the above binder as described below:-
a) an asphaltenes-containing adhesive containing neat asphaltenes-containing binder obtained by heating the binder to 180 °C before use.
b) an asphaltenes-containing adhesive containing a 1:1 w/w mixture of binder and solid particles, obtained by heating the binder to a temperature of 200-220 °C and mixing mineral filler into the binder; a higher temperature being employed than for adhesive a) to ensure complete mixing of mineral filler and binder. The mineral filler used was a crushed limestone obtained from the Winterswijk quarry in The Netherlands under the trade name "Wigro".

Pavers of carbon concrete were prepared in a manner analogous to that described in Example 1 of WO 00/46164; having dimensions of approximately 200 mm X 100 mm X 80 mm and comprising approximately 7.5% by weight of hydrocarbonaceous binder and 20% by weight of filler, 40% by weight of sand and 40% by weight of stones, all weights based on total amount of filler, sand and stones. The carbon concrete pavers had a flexural strength of from 6-7 N/mm².

Pavers of cement concrete were obtained from Biemans Ltd. of Oosterhouht, The Netherlands, and had a flexural strength of from 7-8 N/mm².

Three types of test were performed to assess how well adhesives a) and b) joined the pavers; the interface at the join between the pavers being different in each type of test.

In a first test, pavers were "sawn" in two using a diamond saw and the sawn-faces of the pavers rejoined using adhesives a) and b).

In a second test, pavers were "broken" using a standard flexural strength test method (NEN 7000) and the fractured pavers then rejoined using adhesives a) and b).

In a third test, pavers were sawn in half and then joined together in an "end-to-end" manner using adhesives a) and b) (i.e. the non-sawn ends of the pavers were joined as if two whole pavers were being joined). This was done as the flexural strength of a join between two whole pavers could not be conveniently measured as the joined pavers were too large for the test equipment.

In each test the adhesive was applied by preheating the pieces of paver to be joined in an oven at a temperature of 150 °C. For cement concrete the pieces of paver were heated for approximately 2 hours whilst for carbon concrete the pieces of paver were heated for approximately 1 hour. The pieces of paver were then removed from the oven and a thin layer of adhesive applied to the surfaces of the pavers to be joined by means of an applicator. Once the adhesive had been applied, the surfaces of the two pieces of paver were contacted and left to stand at room temperature for 24 hours, after which time they were subjected to flexural strength testing.

Pieces of carbon concrete paver to carbon concrete paver (Example 1); cement concrete paver to cement concrete paver (Example 2); and carbon concrete paver to cement concrete paver (Example 3) were joined using adhesives a) and b). Each test was repeated 3-5 times and the average reading recorded. The results are shown in Table 1.

**TABLE 1**

| Example | Paver type : | Interface | Flexural Strength N/mm² | |
|---|---|---|---|---|
| | Paver type | | adhesive a) | adhesive b) |
| 1 | carbon concrete¹⁾: | sawn | 3.7 | 6.1 |
| | carbon concrete | broken | 2.5 | 5.5 |
| | | end-to-end | - | 3.9 |
| 2 | cement concrete²⁾: | sawn | - 2.7 | 5.5 |
| | cement concrete | broken | 2.0 | 5.0 |
| | | end-to-end | - | 4.0 |
| 3 | carbon concrete: | sawn | 1.8 | 4.2 |
| | cement concrete | | | |

| | | | | |
|---|---|---|---|---|
| 1) flexural strength 6-7 N/mm² 2) flexural strength 7-8 N/mm² | | | | |

From Table 1 it can be seen that the process of the present invention can be used to join articles of carbon concrete together. When an adhesive comprising a 1:1 mixture of binder and solid particles is employed to join pavers of carbon concrete having sawn surfaces, the strength of the join approaches that of the paver itself.

Further, it is shown that the process of the present invention can also be used to join articles of cement concrete together, and to join articles of cement concrete to articles of carbon concrete.

In a comparative example, an attempt was made to use a reheated sample of carbon concrete paver to rejoin two pieces of "broken", carbon concrete together. The sample of paver used was identical to that employed in Example 1 and to the pieces of paver being rejoined, having a binder content of 7% wt. The sample was cut from the paver by means of a diamond saw, heated to 200-220 °C, and applied as an adhesive to two pieces of "broken" carbon concrete in a manner analogous to that described for adhesives a) and b). In this example, the two pieces of paver did not adhere and it was not possible to measure the flexural strength of the join.

## Claims

1. Process for joining solid-state compositions comprising adhering two or more solid-state compositions together with an asphaltenes-containing adhesive which comprises in the range of from 100 to 10 % by weight of an asphaltenes-containing binder having a penetration of less than 15 dmm, and in the range of from 0 to 90% by weight of solid particles, based on total weight of asphaltenes-containing adhesive, with the proviso that the solid particles are not solely petroleum coke particles.

2. Process according to claim 1, wherein the asphaltenes-containing adhesive comprises in the range of from 100% to greater than 30% by weight of an asphaltenes-containing binder having a penetration of less than 15 dmm, and in the range of from 0 to less than 70 % by weight of solid particles.

3. Process according to claim 1 or claim 2, wherein the asphaltenes-containing binder has a penetration of at most 10 dmm.

4. Process according to any one of claims 1 to 3, wherein the asphaltenes-containing binder contains in the range of from 15 to 95% by weight, based on total binder, of asphaltenes, which asphaltenes contain at least 60% aromatic carbon; and in the range of from 5 to 85% by weight, based on total binder, of further hydrocarbons.

5. Process according to any one of claims 1 to 4, wherein the solid particles have an average particle size of less than 63 micrometers.

6. Process according to any one of claims 1 to 5, wherein the solid particles are mineral particles.

7. Process according to any one of claims 1 to 6, for joining carbon concrete construction elements.

8. An asphaltenes-containing adhesive comprising in the range of from 100% to greater than 30% by weight of an asphaltenes-containing binder having a penetration of less than 15 dmm, and in the range of from 0 to less than 70 % by weight of solid particles, based on total weight of asphaltenes-containing adhesive, with the proviso that the solid particles are not solely petroleum coke particles.

9. Process for recycling solid-state compositions comprising heating an asphaltenes-containing adhesive which joins two or more solid-state compositions to a temperature where the asphaltenes-containing adhesive softens such that the solid-state compositions may readily be separated, which asphaltenes-containing adhesive comprises in the range of from 100 to 10 % by weight of an asphaltenes-containing binder having a penetration of less than 15 dmm, and in the range of from 0 to 90% by weight of solid particles, based on total weight of asphaltenes-containing adhesive, with the proviso that the solid particles are not solely petroleum coke particles.

10. Process of crack-repair comprising applying an asphaltenes-containing adhesive to a crack in a solid-state composition, which asphaltenes-containing adhesive comprises in the range of from 100 to 10 % by weight of an asphaltenes-containing binder having a penetration of less than 15 dmm, and in the range of from 0 to 90% by weight of solid particles, based on total weight of asphaltenes-containing adhesive, with the proviso that the solid particles are not solely petroleum coke particles.

## Patentansprüche

1. Verfahren zum Verbinden von in festem Zustand vorliegenden Zusammensetzungen, umfassend das Zusammenkleben von zwei oder mehreren in festem Zustand vorliegenden Zusammensetzungen mit einem Asphaltene-hältigen Klebstoff, welcher im Bereich von 100 bis 10 Gew.-% eines Asphaltene-hältigen Bindemittels mit einer Penetration von weniger als 15 dmm und im Bereich von 0 bis 90 Gew.-% an festen Teilchen, bezogen auf das Gesamtgewicht des Asphaltene-hältigen Klebstoffs, umfasst, mit der Maßgabe, dass die festen Teilchen nicht ausschließlich Petrolkoksteilchen sind.

2. Verfahren nach Anspruch 1, wobei der Asphaltene-hältige Klebstoff im Bereich von 100 % bis mehr als 30 Gew. -% an Asphaltene-hältigem Bindemittel mit einer Penetration von weniger als 15 dmm und im Bereich von 0 bis weniger als 70 Gew.-% an festen Teilchen umfasst.

3. Verfahren nach Anspruch 1 oder Anspruch 2, wobei das Asphaltene-hältige Bindemittel eine Penetration von höchstens 10 dmm aufweist.

4. Verfahren nach einem der Ansprüche 1 bis 3, wobei das Asphaltene-hältige Bindemittel im Bereich von 15 bis 95 Gew.-%, bezogen auf das gesamte Bindemittel, an Asphaltenen, welche Asphaltene wenigstens 60 % aromatischen Kohlenstoff enthalten, und im Bereich von 5 bis 85 Gew.-%, bezogen auf das gesamte Bindemittel, an weiteren Kohlenwasserstoffen umfasst.

5. Verfahren nach einem der Ansprüche 1 bis 4, wobei die festen Teilchen eine durchschnittliche Teilchengröße von weniger als 63 Mikrometer aufweisen.

6. Verfahren nach einem der Ansprüche 1 bis 5, wobei die festen Teilchen mineralische Teilchen sind.

7. Verfahren nach einem der Ansprüche 1 bis 6 zum Verbinden von Kohlenstoffbeton-Konstruktionselementen.

8. Asphaltene-hältiger Klebstoff, umfassend im Bereich von 100 % bis mehr als 30 Gew.-% von einem Asphaltene-hältigen Bindemittel mit einer Penetration von weniger als 15 dmm und im Bereich von 0 bis weniger als 70 Gew.-% an festen Teilchen, bezogen auf das Gesamtgewicht des Asphaltene-hältigen Klebstoffs, mit der Maßgabe, dass die festen Teilchen nicht ausschließlich Petrolkoksteilchen sind.

9. Verfahren zum Rezyklieren von festem Zustand vorliegenden Zusammensetzungen, umfassend das Erhitzen eines Asphaltene-hältigen Klebstoffs, welcher zwei oder mehrere in festem Zustand vorliegende Zusammensetzungen verbindet, auf eine Temperatur, bei welcher sich der Asphaltene-hältige Klebstoff erweicht, sodass die in festem Zustand vorliegenden Zusammensetzungen leicht getrennt werden können, welcher Asphaltene-hältige Klebstoff im Bereich von 100 bis 10 Gew.-% eines Asphaltene-hältigen Bindemittels mit einer Penetration von weniger als 15 dmm und im Bereich von 0 bis 90 Gew.-% an festen Teilchen, bezogen auf das Gesamtgewicht an Asphaltene-hältigem Klebstoff, umfasst, mit der Maßgabe, dass die festen Teilchen nicht ausschließlich Petrolkoksteilchen sind.

10. Verfahren zum Reparieren von Rissen, umfassend das Aufbringen eines Asphaltene-hältigen Klebstoffs auf einem Riss in einer in festem Zustand vorliegenden Zusammensetzung, welcher Asphaltene-hältige Klebstoff im Bereich von 100 bis 10 Gew.-% an Asphaltene-hältigem Bindemittel mit einer penetration von weniger als 15 dmm und im Bereich von 0 bis 90 Gew.-% an festen Teilchen, bezogen auf das Gesamtgewicht an Asphaltene-hältigem Klebestoff, umfasst, mit der Maßgabe, dass die festen Teilchen nicht ausschließlich Petrolkoksteilchen sind.

## Revendications

1. Procédé de jonction de compositions à l'état solide comprenant l'adhérence de l'une à l'autre de deux compositions à l'état solide ou plus avec un adhésif contenant des asphaltènes qui comprend de 100 à 10 % en poids d'un liant contenant des asphaltènes ayant une pénétration de moins de 15 dmm, et de 0 à 90 % en poids de particules solides, par rapport au poids total de l'adhésif contenant des asphaltènes, à la condition que les particules solides ne soient pas uniquement des particules de coke de pétrole.

2. Procédé suivant la revendication 1, dans lequel l'adhésif contenant des asphaltènes comprend de 100 % à plus de 30 % en poids d'un liant contenant des asphaltènes ayant une pénétration de moins de 15 dmm, et de 0 à moins de 70 % en poids de particules solides.

3. Procédé suivant la revendication 1 ou la revendication 2, dans lequel le liant contenant des asphaltènes a une pénétration d'au plus 10 dmm.

4. Procédé suivant l'une quelconque des revendications 1 à 3, dans lequel le liant contenant des asphalténes contient de 15 à 95 % en poids, par rapport au liant total, d' asphaltènes, lesquels asphaltènes contiennent au moins 60 % de carbone aromatique, et de 5 à 85 % en poids, par rapport au liant total, d'autres hydrocarbures.

5. Procédé suivant l'une quelconque des revendications 1 à 4, dans lequel les particules solides ont une taille de particule moyenne de moins de 63 micromètres.

6. Procédé suivant l'une quelconque des revendications 1 à 5, dans lequel les particules solides sont des particules minérales.

7. Procédé suivant l'une quelconque des revendications 1 à 6, pour la jonction d'éléments de construction en béton carbonés.

8. Adhésif contenant des asphaltènes comprenant de 100 % à plus de 30 % en poids d'un liant contenant des asphaltènes ayant une pénétration de moins de 15 dmm, et de 0 à moins de 70 % en poids de particules solides, par rapport au poids total de l'adhésif contenant des asphaltènes, à la condition que les particules solides ne soient pas uniquement des particules de coke de pétrole.

9. Procédé de recyclage de compositions à l'état solide comprenant le chauffage d'un adhésif contenant des asphaltènes qui joint deux compositions à l'état solide ou plus à une température où l'adhésif contenant des asphaltènes se ramollit, de telle sorte que les compositions à l'état solide puissent être aisément séparées, lequel adhésif contenant des asphaltènes comprend de 100 à 10 % en poids d'un liant contenant des asphaltènes ayant une pénétration de moins de 15 dmm, et de 0 à 90 % en poids de particules solides, par rapport au poids total de l'adhésif contenant des asphaltènes, à la condition que les particules solides ne soient pas uniquement des particules de coke de pétrole.

10. Procédé de réparation de fissures comprenant l'application d'un adhésif contenant des asphaltènes à une fissure dans une composition à l'état solide, lequel adhésif contenant des asphaltènes comprend de 100 à 10 % en poids d'un liant contenant des asphaltènes ayant une pénétration de moins de 15 dmm, et de 0 à 90 % en poids de particules solides, par rapport au poids total de l'adhésif contenant des asphaltènes, à la condition que les particules solides ne soient pas uniquement des particules de coke de pétrole.
